(19) Europäisches Patentamt / European Patent Office / Office européen des brevets

(11) **EP 2 782 104 A1**

(12) **EUROPEAN PATENT APPLICATION**
published in accordance with Art. 153(4) EPC

(43) Date of publication:
**24.09.2014 Bulletin 2014/39**

(51) Int Cl.:
**H01B 5/04** *(2006.01)*　　**G01L 5/10** *(2006.01)*

(21) Application number: **12850569.0**

(22) Date of filing: **13.11.2012**

(86) International application number:
**PCT/CN2012/084551**

(87) International publication number:
**WO 2013/071855 (23.05.2013 Gazette 2013/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.11.2011 CN 201110361043**

(71) Applicant: **China Jiliang University
Hangzhou, Zhejiang 310018 (CN)**

(72) Inventors:
• **TONG, Renyuan
  Zhejiang 310018 (CN)**
• **LI, Qing
  Zhejiang 310018 (CN)**
• **LI, Ming
  Zhejiang 310018 (CN)**
• **LI, Xiong
  Zhejiang 310018 (CN)**
• **SHI, Ge
  Zhejiang 310018 (CN)**

(74) Representative: **Sun, Yiming et al
HUASUN Patent- und Rechtsanwälte
Friedrichstraße 33
80801 München (DE)**

(54) **POWER CABLE WITH PARALLEL SPIRAL TRANSMISSION LINE STRUCTURE FOR DISTRIBUTED SENSING AND MEASURING OF ROCK-SOIL MASS DEFORMATION**

(57)　This invention discloses a parallel spiral transmission line structure sensing cable for rock and soil deformation distributed measurement. A circular cross-section silicone rubber is tightly wounded by two insulated wires. The two insulated wires make the spiral cable. Out of the spiral cable is the silicone rubber pipe). They constitute a sensing cable. A termination matching impedance ZL is connected to one end of the two wires. TDR measurement instrument is connected to the other end of the two wires. This invention implements a distributed positioning and measuring rock and sail deformation. It solves the dilemma of "measuring at unchanged and the changed is not measured" in the landslides, ground subsidence and other geotechnical deformation monitoring. It provides good tool for distributed deformation measurement.

Figure 1

## Description

## Technical field

This invention relates to a rock deformation distributed sensing cable, particularly to a parallel spiral structure transmission line sensing cable for the rock and mass deformation distributed measurement.

## Background art

China is a country with frequent geological disasters which lead to great loss of lives and property. In order to reduce the losses, geological disaster monitoring methods with various tools and techniques have been widely applied to various fields and have made a significant effect. Landslides and ground subsidence caused by local rock and mass deformation is an important disaster precursory phenomena in monitoring field. If we can accurately locate the position and size of rock and mass deformation occurred in the pre-disaster, we can promote disaster prevention, disaster preparedness and effective reduce losses caused by disasters. Currently, TDR (time domain reflectometry) sensing cables are mainly coaxial cables or parallel lines. Due to the limited amount of present TDR sensing cables' elongation, easy to pull off, are not suitable for large distributed measurement like rock and soil deformation, and therefore need to invent a new TDR sensing cable.

In order to overcome the problem of TDR sensing cable easy to pull off, which is described in the background art, this invention is to provide a kind of parallel spiral transmission line structure distributed sensing cable for rock and mass deformation measurement, which can have a larger elongation.

## Summary of the invention

Two parallel insulated cables tightly wound along a circular cross section silicone rubber. These two cables form a pair of spiral cables. There is a silicon rubber pipe covered the spiral cables. Then a matched impedance $Z_L$ connects one termination of the spiral cables and a TDR measurement instrument connect the other termination.

The two insulated cable can be made of a single strand, multi-strand copper wires or a single strand aluminum wire.

When the sensing cable is constructed along the body of rock and soil, it will be stretched longer when rock and soil deformation occurs. Because of the silicone rubber and the elastic spiral structure, pitch of the spiral cable increases without breaking in a relatively large range in the stretching process. Because the pitch is increased, the characteristic impedance of the deformed cables will be changed. Local variations in the time-domain waveform by the reflection of the parallel connected helical domain reflectometry apparatus in which the observer locally changes the characteristic impedance of one end of the soil caused by the deformation to locate the position of deformation and measure rock deformation. The local characteristic impedance changes will lead to the change of TDR waveform which can be recorded by TDR measurement instrument. With the TDR waveform, the position of the deformation will be located and the size of the deformation will be measured.

This invention's beneficial effects are as follows:

This invention implements a distributed positioning and measuring rock and sail deformation. It solves the dilemma of "measuring at unchanged and the changed is not measured" in the landslides, ground subsidence and other geotechnical deformation monitoring. It provides good tool for distributed deformation measurement.

## Brief description of the drawings

Figure 1 is a schematic diagram of the structure of the invention.

Figure 2 is the structure of two parallel straight wires.

Figure 3 is a structural change in distributed deformation measurements before and after the local cable tension.

Figure 4 is the sensing method.

Figure 5 is the TDR waveform.

In the Figures: 1) silicone rubber; 2) wires; 3) silicone rubber pipe; 4) TDR instrument; 5) the incident signal; 6) the reflected signal; 7) sensing cable.

## Detailed description of the invention

The invention will be further described with accompanying drawings and instances.

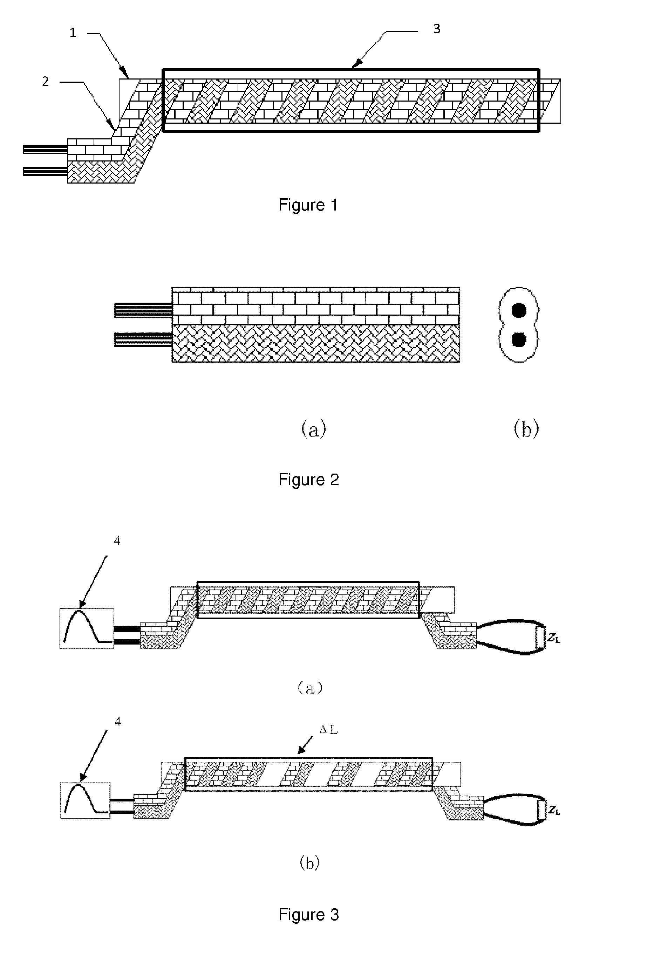

As Figure 1, Figure 2, Figure 3 and Figure 4 shows, and the invention is a circular cross-section silicone rubber (1) tightly wounded by two insulated wires (2). The two insulated wires make the spiral cable. Out of the spiral cable is the silicone rubber pipe (3). They constitute a sensing cable (7). A termination matching impedance $Z_L$ is connected to one end of the two wires. TDR measurement instrument is connected to the other end of the two wires (4).

The Insulation scarfskin of the straight parallel wires is connected together so that the distance between the wires remains unchanged. Initially the wires tightly wound the surface of the circular cross-section silicone. The above structure characteristic let the sensing cable have a relatively large elongation. The change of the helix pitch causes impedance changes when the cable is stretched.

Principle of the sensing cable:

Figure 3 shows the structure changes of sensing cable before and after stretch. Figure 3(a) is the sensing cable before stretch; Figure 3(b) is the sensing cable with local stretch. For Figure 3, we can see that when the sensing cable is locally stretched, the number of the coils is fixed and the length of the cable is increased. So the thread pitch of stretched part and the local characteristic impedance are increasing.

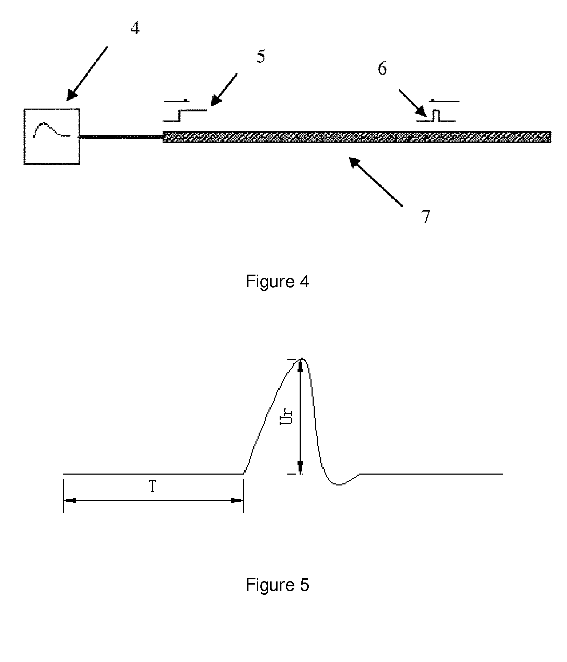

Measuring method is showed in Figure 4. 5 is the incident signal and 6 is the reflected signal. One end of the sensing cable is connected to TDR instrument (4). According to the principle of the transmission line, when TDR instrument sends a step signal or a pulse signal from the end of the cable, the reflected voltage $U_t$ and the input voltage $U_r$ have the following relationship

$$U_r = \frac{Z_d - Z_c}{Z_d + Z_c} * U_t$$

Where $Z_c$ is the initial characteristic impedance of the cable;
$Z_d$ is the characteristic impedance of the stretch section.
Initially $Z_c = Z_d$ and reflected voltage $U_r = 0$. When the cable is locally stretched, $Z_d$ increases and TDR waveform produces a greater than 0 reflected voltage $U_r$. The TDR instrument records the reflected voltage waveform shown in Figure 5.

According to time difference T between the reflected voltage $U_t$ and the incident voltage $U_r$ and spread speed v, the distance S between the cable terminal and stretch point can be calculated.

$$S = \frac{1}{2} * T * v$$

If the cable is buried in rock or soil, the deformation of rock or soil will cause sensing cable local stretch. According to the time $T$ and the reflected voltage $U_r$, deformation $\varDelta L$ and deformation position S can be measured.

**Claims**

1.  A sensing cable of parallel spiral transmission line structure for rock and mass deformation distributed measurement, which characterizes are as follows: The insulated rubber scarfskin of two parallel and straight wires are tied together, then it can remain the distance of the two wires unchanged. The two mutual insulating wires(2) wrap around the silicone rubber(1), then the spiral wire comes into being in this way, and the spiral wire is wrapped by silicone rubber casing(3). One end of the spiral wire connects matched impedance, and the other end connects the time domain reflection measurement instrument (4).

2.  The sensing cable of parallel spiral transmission line structure for rock and mass deformation distributed measurement according to claim 1 characterizes in: the two parallel insulated wires (2) can be single-stranded wires or multi-stranded wires or single-stranded aluminum wire.

Figure 1

(a)

(b)

Figure 2

(a)

(b)

Figure 3

4

5

6

7

Figure 4

T

Ur

Figure 5

**EP 2 782 104 A1**

<div align="center">

# INTERNATIONAL SEARCH REPORT

</div>

| International application No. |
|---|
| PCT/CN2012/084551 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H01B

Documentation searched other than minimum documentation to the extent that such documents are included in the fields searched

Electronic data base consulted during the international search (name of data base and, where practicable, search terms used)

WPI EPODOC CNPAT CNKI cable induct+ impedance deform+

**C. DOCUMENTS CONSIDERED TO BE RELEVANT**

| Category* | Citation of document, with indication, where appropriate, of the relevant passages | Relevant to claim No. |
|---|---|---|
| X | CN 102109319 A (CHINA METROLOGY COLLEGE) 29 June 2011 (29.06.2011) paragraphs 22-29 and figures 1-4 | 1, 2 |
| X | CN 101566508 A (UNIVERSITY NANJING) 28 October 2009 (28.10.2009) description, embodiment and figures 1-4 | 1, 2 |
| PX | CN 102522148 A (CHINA METROLOGY COLLEGE) 27 June 2012 (27.06.2012) claims 1, 2 | 1, 2 |

| ☐ Further documents are listed in the continuation of Box C. | ☒ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 04 February 2013 (04.02.2013) | 14 February 2013 (14.02.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>LI, Sujuan<br><br>Telephone No. (86-10)62411774 |
|---|---|

Form PCT/ISA /210 (second sheet) (July 2009)

## INTERNATIONAL SEARCH REPORT
### Information on patent family members

| | International application No. |
|---|---|
| | PCT/CN2012/084551 |

| Patent Documents referred in the Report | Publication Date | Patent Family | Publication Date |
|---|---|---|---|
| CN 102109319 A | 29.06.2011 | None | |
| CN 101566508 A | 28.10.2009 | CN 101566508 B | 20.07.2011 |
| CN 102522148 A | 27.06.2012 | None | |

Form PCT/ISA /210 (patent family annex) (July 2009)

**INTERNATIONAL SEARCH REPORT**

International application No.

PCT/CN2012/084551

**Continuation of:**

**A. CLASSIFICATION OF SUBJECT MATTER**

H01B 5/04 (2006.01) i
G01L 5/10 (2006.01) i

Form PCT/ISA /210 (extra sheet) (July 2009)